# DEMANDE DE BREVET EUROPEEN

(11) **EP 0 554 199 A1**
(43) Date de publication de la demande: **04.08.1993**
(21) Numéro de dépôt: 93440005.2
(22) Date de dépôt: 21.01.1993
(51) Int. Cl.: C03C 27/04

(54) **Procédé de fixation d'éléments métalliques, en particulier de pattes de fixation, sur des panneaux en verre**

(30) Priorité: 31.01.1992 FR 9201261
(71) Demandeur: VTF INDUSTRIES, S.A.R.L., F-57870 Troisfontaines (FR)
(72) Inventeur: Vogt, Gilbert, F-57400 Sarrebourg (FR)
(74) Mandataire: Nuss, Pierre

(57) **Abrégé**

La présente invention concerne un procédé de fixation d'éléments métalliques, en particulier de pattes de fixation, sur des panneaux en verre.

Procédé caractérisé en ce qu'il consiste essentiellement à munir le panneau en verre, avant trempe, aux endroits précis de réception d'une équerre ou d'une patte de fixation, d'un revêtement métallique, en particulier d'une argenture, déposé par sérigraphie ou par tout autre moyen, simultanément avec le décor.

L'invention s'applique plus particulièrement dans le domaine des équipements électroménagers.

## Description

La présente invention concerne le domaine des panneaux en verre, en particulier utilisables dans les équipements électroménagers, notamment les fours encastrables et cuisinières présentant un ou plusieurs panneaux de verre sur leur face avant, et a pour objet un procédé de fixation d'éléments métalliques, en particulier de pattes de fixation, sur de tels panneaux en verre.

Dans le domaine des équipements électroménagers, les fours encastrables et les cuisinières présentent un ou plusieurs panneaux de verre sur leur face avant, ces panneaux étant généralement trempés et décorés par sérigraphie.

Ces panneaux peuvent faire partie ou non d'une porte et être fixes ou mobiles par rapport à l'appareil qu'ils sont destinés à habiller. A cet effet, il existe actuellement essentiellement deux modes de montage de ces panneaux en verre sur les appareils précités, à savoir par montage du panneau dans un cadre ou par fixation directe sur l'appareil, le plus souvent par collage.

Dans le premier cas, le panneau est enchâssé dans un cadre sur au moins deux de ses côtés, ledit cadre faisant partie de l'appareil ou de la porte de l'appareil.

Dans le deuxième cas, la fixation sur l'appareil est réalisée par l'intermédiaire de pattes ou d'équerres métalliques, collées sur le panneau de verre et fixées sur l'appareil par clippage, par agrafage ou par sertissage.

L'utilisation d'un cadre présente, cependant, l'inconvénient de nécessiter un montage réel du verre sur un ensemble, à savoir la porte, le cadre, etc..., avec serrage, ce qui entraîne la mise en place de pièces intermédiaires afin de ne pas brider le verre et d'éviter les problèmes mécaniques en découlant, notamment suite à des chocs thermiques.

La solution faisant intervenir un collage d'équerres ou de pattes sur le verre nécessite un temps de polymérisation de la colle compris entre 24 heures et 72 heures, ce qui entraîne généralement une immobilisation des pièces après collage. Cette immobilisation pourrait être réduite par l'utilisation simultanée d'une colle à prise rapide et d'une autre à prise longue.

En outre, l'automatisation du collage implique des investissements très lourds.

Par ailleurs, un positionnement précis des équerres ou pattes de fixation ne peut pas être garanti du fait que les panneaux sont soumis à des manipulations avant ou pendant le séchage et que la prise ferme de la colle n'est pas immédiate.

A ces inconvénients s'ajoute le fait qu'il est difficile de maîtriser parfaitement l'épaisseur de la couche de colle et d'éviter ainsi que celle-ci déborde.

Enfin, le collage est une opération relativement coûteuse en main d'oeuvre et en amortissement des équipements et nécessite un dégraissage préalable et complet des équerres et un pré-encollage des surfaces à coller. Un tel dégraissage suivi d'un pré-encollage met en oeuvre des solutions chimiques dégageant des vapeurs nocives, ce qui entraîne également la nécessité de prévoir des extracteurs destinés à dégager cesdites vapeurs.

La présente invention a pour but de pallier ces inconvénients.

Elle a, en effet, pour objet un procédé de fixation d'éléments métalliques, en particulier de pattes de fixation, sur des panneaux en verre, caractérisé en ce qu'il consiste essentiellement à munir le panneau en verre, avant trempe, aux endroits précis de réception d'une équerre ou d'une patte de fixation, d'un revêtement métallique, en particulier d'une argenture, déposé par sérigraphie ou par tout autre moyen, simultanément avec le décor.

Ainsi, l'argenture ou autre revêtement métallique adhère au verre ou à l'émail décorant ledit verre, lors de la trempe de ce dernier.

Les pattes ou équerres de fixation peuvent alors être soudées sur l'argenture, permettant ainsi une fixation immédiate, ce qui entraîne de nombreux avantages, à savoir une automatisation complète avec un investissement minimum, une productivité élevée, un positionnement fiable et précis des pattes ou équerres, une réduction des risques de rayure du verre du fait de la suppression de nombreuses manipulations et, en corollaire, un coût de l'opération relativement faible.

Conformément à une autre caractéristique de l'invention, le revêtement métallique est combiné avec des émaux formant la couche de revêtement décorative. Ainsi, il est possible de résoudre simultanément le problème de transparence de la surface du revêtement et de la couche d'émail.

Il est également possible, selon une autre caractéristique de l'invention, de déposer des plots métalliques, notamment d'argenture, avant la trempe des panneaux de verre, et de réaliser ensuite un soudage des équerres et pattes de fixation par simple dépôt de celles-ci sur les plots, puis passage dans un four, sans manipulation, ni pression sur les pattes ou équerres. Dans un tel mode de réalisation, le soudage des pattes ou équerres sur les plots d'argenture ou d'un autre métal est simplement effectué par l'intervention d'un fort gradient de température.

Conformément à une autre caractéristique de l'invention, les pattes ou équerres de fixation présentent avantageusement une élasticité propre, par réalisation en un matériau élastiquement déformable ou dans une forme permettant une déformation élastique. A cet effet, les pattes ou équerres peuvent avantageusement être réalisées, par exemple, en un acier à ressort, sous forme de lames relativement souples se déformant sous un choc et reprenant leur forme initiale, ou présenter une forme permettant une déformation élastique.

Ainsi, il est possible de réaliser un amortissement de chocs éventuels sur le verre, après montage de ce dernier en position de service. Cet amortissement de chocs est aussi performant que celui obtenu par un plot de colle dans le cas du collage d'une équerre sur un verre.

Grâce à l'invention, il est possible de réaliser un montage fiable, précis, économique et rapide de pattes ou d'équerres de fixation sur un panneau de verre, ce panneau pouvant lui-même être monté, par exemple par clippage, sur un appareil ou un support de réception des pattes ou équerres, sans nécessiter une opération de mise en place supplémentaire.

Dans le cas d'utilisation de panneaux de verre ainsi équipés sur des appareils tels que des fours ou des cuisinières, il devient possible de réaliser lesdits appareils seuls, les panneaux de verre décorés, donnant une touche esthétique spécifique à ces appareils, étant montés juste avant expédition, voire même après installation desdits appareils chez le client final.

La présente invention a été décrite à propos de panneaux en verre destinés plus spécialement à une utilisation dans des appareils électroménagers, mais s'applique également à tout panneau en verre muni de pattes ou d'équerres de fixation, quelle que soit sa destination, à savoir, notamment, projecteur, panneau radiant, miroir, élément de mobilier.

## Revendications

1. Procédé de fixation d'éléments métalliques, en particulier de pattes de fixation, sur des panneaux en verre, caractérisé en ce qu'il consiste essentiellement à munir le panneau en verre, avant trempe, aux endroits précis de réception d'une équerre ou d'une patte de fixation, d'un revêtement métallique, en particulier d'une argenture, déposé par sérigraphie ou par tout autre moyen, simultanément avec le décor.

2. Procédé, suivant la revendication 1, caractérisé en ce que le revêtement métallique est combiné avec des émaux formant la couche de revêtement décorative.

3. Procédé, suivant la revendication 1, caractérisé en ce qu'il consiste à souder des pattes ou des équerres de fixation sur l'argenture.

4. Procédé, suivant la revendication 1, caractérisé en ce qu'il consiste à déposer des plots métalliques, notamment d'argenture, avant la trempe des panneaux de verre, et à réaliser ensuite un soudage des équerres ou pattes de fixation par simple dépôt de celles-ci sur les plots, puis passage dans un four, sans manipulation, ni pression sur les pattes ou équerres.

5. Procédé, suivant l'une quelconque des revendications 1, 3 et 4, caractérisé en ce que les pattes ou équerres de fixation présentent avantageusement une élasticité propre, par réalisation en un matériau élastiquement déformable ou dans une forme permettant une déformation élastique.
